# EUROPÄISCHE PATENTANMELDUNG

(11) **EP 4 112 332 A1**
(43) Veröffentlichungstag der Anmeldung: **04.01.2023**
(21) Anmeldenummer: 22179144.5
(22) Anmeldetag: 15.06.2022
(51) Int. Cl.: B60C 7/10, B60C 7/12, B60C 19/12

(54) **FAHRZEUGRAD**

(30) Priorität: 01.07.2021 DE 102021206922
(71) Anmelder: Continental Reifen Deutschland GmbH, 30165 Hannover (DE)
(72) Erfinder: Gandyra, Stefan, 30165 Hannover (DE)
(74) Vertreter: Continental Corporation

(57) **Zusammenfassung**

Es wird vorgeschlagen, dass
im mittleren Bereich (10) zwischen dem druckluftgefüllten inneren Bereich (7) und dem äußeren Bereich (2) eine Vielzahl von Federungselementen in Form von Füllkörpern (1) angeordnet sind.

## Beschreibung

Die Erfindung betrifft ein Fahrzeugrad.

Es sind unterschiedliche Konzepte bekannt, Fahrzeugluftreifen durch andere Fahrzeugreifen zu ersetzen. Alle neuen Konzepte haben ihre Vor- und Nachteile und haben sich bislang noch nicht am Markt durchgesetzt.

Der Erfindung lag die Aufgabe zugrunde, ein Fahrzeugrad bereitzustellen, bei dem insb. die Pannensicherheit verbessert wird.

Gelöst wird die Aufgabe durch den Oberbegriff und die kennzeichnenden Merkmale von Anspruch1 dadurch, dass
im mittleren Bereich zwischen dem druckluftgefüllten inneren Bereich und dem äußeren Bereich eine Vielzahl von Federungselementen in Form von Füllkörpern angeordnet sind.

Ein Vorteil der Erfindung ist insbesondere darin zu sehen, dass mit der neuen Fahrzeugreifenkonstruktion eine hohe Pannensicherheit gewährleistet wird und außerdem der Fahrkomfort wesentlich verbessert wird. Die Füllkörper im mittleren Bereich sorgen dafür, dass das Fahrzeugrad optimal auf der Fahrbahn einfedern und außerdem einen hohen Fahrkomfort bereitstellen kann. Außerdem haben sie den Vorteil, dass damit eine hohe Pannensicherheit verbunden ist. Für den Fall, das spitze Gegenstände in den mittleren Bereich eindringen, führt das nicht zu einem Druckverlust des Reifens. Alle drei Bauteilgruppen des Fahrzeugreifens, der mittlere Bereich, der äußere Bereich und der innere Bereich können unabhängig voneinander hergestellt werden. Dadurch lässt sich der Fahrzeugreifen sehr flexibel herstellen.

In einer vorteilhaften Weiterbildung der Erfindung ist vorgesehen, dass die Füllkörper in Form von zylindrisch geformten Rollen ausgebildet sind.

Dadurch besitzen die Füllkörper einen hohen Federungskomfort.

In einer weiteren vorteilhaften Weiterbildung der Erfindung ist vorgesehen, dass die zylindrisch geformten Rollen in Bezug zur Mittelachse des Fahrzeugrades eine Schrägstellung aufweisen.

Dadurch wird gewährleistet, dass in der Bodenaufstandsfläche des Fahrzeugrades immer mindestens zwei Füllkörper indirekt mit der Fahrbahn in Kontakt stehen. Der Fahrkomfort wird dadurch wesentlich verbessert.

In einer weiteren vorteilhaften Weiterbildung der Erfindung ist vorgesehen, dass die Füllkörper aus einem Kunststoff, Elastomer oder einem Verbundmaterial bestehen.

Dadurch lässt sich der Fahrkomfort an unterschiedliche Bedingungen anpassen.

In einer weiteren vorteilhaften Weiterbildung der Erfindung ist vorgesehen, dass die Füllkörper einen Hohlraum aufweisen.

Dadurch besitzen die Füllkörper einen hohen Federungskomfort.

In einer weiteren vorteilhaften Weiterbildung der Erfindung ist vorgesehen, dass die Füllkörper mit dem Hohlraum luftdicht verschlossen sind.

Dadurch wird die Steifigkeit der Füllkörper positiv beeinflusst.

In einer weiteren vorteilhaften Weiterbildung der Erfindung ist vorgesehen, dass die Füllkörper einen Durchmesser zwischen 40 und 60 mm aufweisen.

Dadurch besitzen die Füllkörper einen hohen Federungskomfort.

In einer weiteren vorteilhaften Weiterbildung der Erfindung ist vorgesehen, dass in den Zwischenräumen zwischen den Füllkörpern mindestens ein Sensor, stromführende und datenführende Leitungen, mindestens eine Batterie und/oder ein Sender angeordnet sind.

Mit diesen elektronischen Bauteilen lassen sich wichtige Reifeneigenschaften einfach erfassen.

In einer weiteren vorteilhaften Weiterbildung der Erfindung ist vorgesehen, dass die Füllkörper mit weiteren Materialen in Form von Kunststoff, Flüssiggummi und/ oder Verstärkungskomponenten umgeben ist.

Dadurch lassen sich die Festigkeitseigenschaften des mittleren Bereichs wesentlich verbessern.

In einer weiteren vorteilhaften Weiterbildung der Erfindung ist vorgesehen, dass der innere Bereich, der mittlere Bereich mit den Füllkörpern und der äußere Bereich des Fahrzeugrades mit einer Verklebung, einer Vulkanisationsverbindung, und/oder mit einer mechanischen Verbindung miteinander verbunden sind. Dadurch lassen sich diese Bauteilgruppen einfach und mit einer hohen Festigkeit verbinden.

Anhand eines Ausführungsbeispiels wird die Erfindung im Folgenden näher beschrieben.

Es zeigen:
- Fig. 1:: Das Fahrzeugrad in einer Seitenansicht.
- Fig. 2:: Eine Aufsicht des Fahrzeugrades mit einer Schnittansicht.
- Fig. 3:: Eine Seitenansicht des Fahrzeugrades mit einer Schnittansicht.
- Fig. 4:: Eine Aufsicht des Fahrzeugrades.
- Fig. 5:: Eine weitere Schnittansicht des Fahrzeugrades.

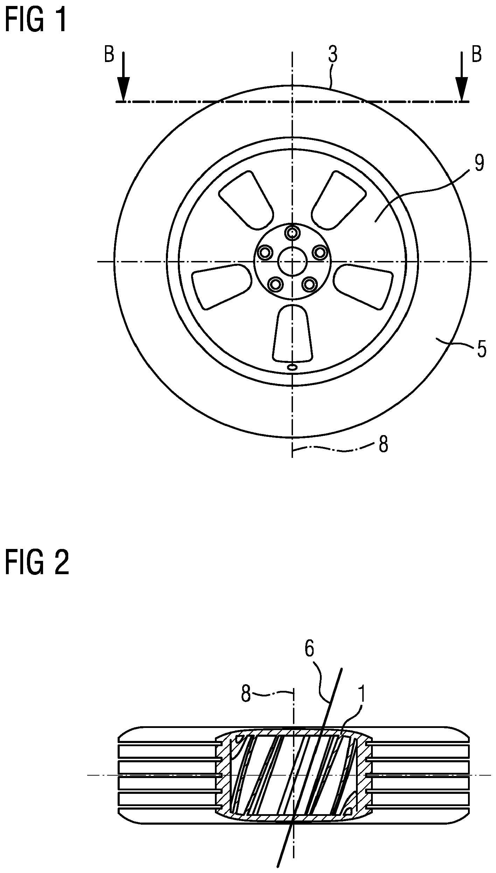

Die Figur 1 zeigt eine Seitenansicht des erfindungsgemäßen Fahrzeugrades mit einer Fahrzeugfelge 9, der Seitenwand 5 und dem Laufstreifen 3.

Die Figur 2 zeigt eine Aufsicht des Fahrzeugrades mit einer Schnittansicht, die in der Figur 1 markiert ist. Die Füllkörper 1 mit der Mittelachse 6 weisen eine Schrägstellung zur Mittelachse 8 des Fahrzeugrades auf. Dadurch wird gewährleistet, dass immer zwei Füllkörper in der Bodenaufstandsfläche indirekt mit der Fahrbahn in Kontakt stehen.

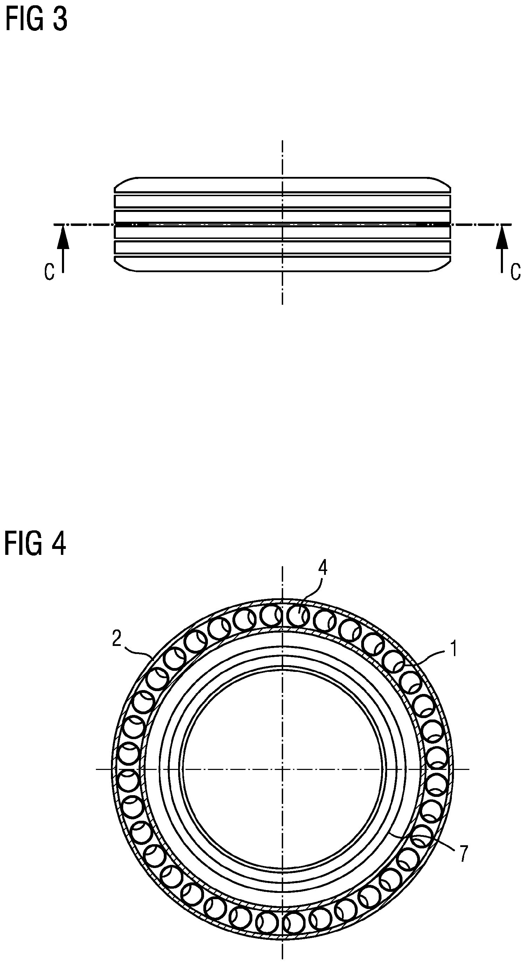

Die Figur 3 zeigt den Fahrzeugreifen in einer Aufsicht ohne die Schnittansicht. In dieser Ansicht ist die Schnittansicht für die Figur 4 markiert.

Die Figur 4 zeigt eine Seitenansicht des erfindungsgemäßen Fahrzeugrades in einer Schnittansicht.

Der äußere Bereich 2 des Fahrzeugreifens, der mit der Fahrbahn in Kontakt steht, kann aus einer Vielzahl von Einzelteilen bestehen und insb. einen Laufstreifen 3 sowie einen Reifengürtel umfassen. Der äußere Bereich 2 kann im Wesentlichen aus Gummi, Stahl und anderen Materialien bestehen, die in einem Vulkanisationsverfahren als Ringstruktur vorproduziert werden können. Dieser Bereich 2 würde mit konventionellen Aufbauprozessen hergestellt werden. Andere Produktionsprozesse, wie beispielsweise Klebeprozesse, sind, abhängig von den verwendeten Materialien, ebenfalls denkbar.

Der innere Bereich 7, der später mit Druckluft gefüllt und in Kontakt mit einer Felge ist, kann mit bekannten bestehenden Wickelprozessen auf einer Baumaschine zu einer Karkasse mit einer Karkasslage zusammengestellt und in einem Vulkanisationsverfahren zu einer Unterbaugruppe verbunden werden.

Andere Produktionsprozesse sind, abhängig von den verwendeten Materialien, ebenfalls denkbar.

Der mittlere Bereich 10 zwischen dem inneren druckluftgefüllten Bereich 7 und dem äußeren Bereich 2 weist eine Vielzahl von Federungselementen in Form von einzelnen Füllkörpern 1 auf.

Die Füllkörper 1 können in Form von zylindrisch geformten Rollen ausgebildet sein, die z.B. aus Kunststoff, Elastomer oder eine Kombination von unterschiedlichen Materialien bestehen.

Durch die Materialwahl, Wandstärke der Füllkörper und unterschiedliche Geometrien der Füllkörper können die Federungseigenschaften des Fahrzeugrades positiv beeinflusst werden.

Die Füllkörper können im mittleren Bereich 10 des Fahrzeugrades unterschiedlich angeordnet sein.

Die Fig. 2 zeigt eine bevorzugte Anordnung der Füllkörper bei der die zylindrischen Rollen eine Schrägstellung zur Mittelachse 8 des Fahrzeugrades aufweisen.

Einzelne oder alle Füllkörper können außerdem miteinander verbunden sein.

Die Füllkörper dienen in erster Linie dazu, die Kraftübertragung zwischen äußeren und inneren Bereich des Reifens herzustellen und ersetzen den sonst mit Überdruck gefüllten Raum eines konventionellen Reifens.

Die Füllkörper können außerdem im Querschnitt ein beliebiges asymmetrisches oder symmetrisches Vieleck bilden und kreisförmig sein. Es können Füllkörper mit gleicher Querschnittsgeometrie oder mit unterschiedlichen Geometrien mit gleichen oder unterschiedlichen Querschnittsflächen Verwendung finden.

Die Füllkörper können luftdicht geschlossen oder offen ausgeführt sein. Dadurch kann die Steifigkeit des Reifens beeinflusst werden.

Bei einer luftdichten Variante der Füllkörper könnte der Vorteil der Pannensicherheit verloren gehen, weshalb diese Körper besonders fest ausgeführt sein sollten.

Die Füllkörper 1 können sowohl mit dem inneren Bereich 7 als auch äußeren Bereich 2 des Fahrzeugrades verbunden sein. Zwischen den Füllkörpern untereinander sind sowohl form- als auch kraftschlüssige Verbindungen denkbar. Die genannten Füllkörpereigenschaften (Material, Wandstärke, Geometrieverlauf, Verbindungstypen, Anordnung und Orientierung im Reifen) sind beliebig miteinander kombinierbar.

In den Zwischenräumen zwischen den Füllkörpern können Sensoren, stromführende und datenführende Leitungen, Batterien und Sender eingebaut werden, beispielsweise um die Temperatur im Reifen beim Reifenbetrieb zu erfassen oder um eine Beschleunigung beim Latschdurchlauf zu ermitteln. Außerdem kann mit den Sensoren der Verschleißzustand des Reifens ermittelt werden und die ermittelten Daten an einen Empfänger im Fahrzeug übertragen werden.

Es ist zudem denkbar bei einer Umhüllung mit leitfähigem Material aus Gummi oder Kunststoff eine Sensorik darzustellen, die beispielsweise das Eindringen oder den Durchstich von metallischen Fremdkörpern detektieren können. Ebenfalls ist es möglich, durch Induktionsprozesse eine Spannung zu generieren, die zum Beispiel als Energieversorgung für Sensoren oder andere Verbraucher - auch in angrenzenden weiteren Reifenbauteilen- dienen kann.

Der Verbund aus Füllkörpern und elektronischen Bauteilen kann außerdem mit einem weiteren Material umgeben werden, z.B. Kunststoff, Flüssiggummi oder weiteren Verstärkungskomponenten.

Abhängig von der Lage der Verstärkungskomponenten, wobei die Ausrichtung radial, axial oder in Umfangsrichtung gerichtet sein kann, kann dieses Material ebenfalls Kräfte übertragen. Besonders vorteilhafte Materialien sind Glasfasern oder Kohlefasern, die dem Material beigemischt werden oder als zusätzlich Bauteile appliziert werden.

Die Verbindung zwischen den einzelnen Reifenbaugruppen:
a) Innerer druckluftgefüllter Bereich 7
b) Mittlerer Bereich 10 mit Füllkörpern 1 mit oder ohne Verstärkungskomponenten
c) Äußerer Bereich 2 mit Laufstreifen 3
   kann, abhängig von den verwendeten Materialien an den Übergängen, mittels Verklebung, Vulkanisation, mechanischer Verbindung oder als Kombination von unterschiedlichen Verbindungsarten ausgeführt sein.

Die Seitenwände 5 können in Form einer Materiallage ausgebildet sein. Sie sind u.a. zur Vermeidung der Verschmutzung der Füllkörper vorgesehen und decken den Bereich auf den Außenseiten des Reifens mit mindestens einer Materiallage ab.

Die Seitenwand 5 kann aus Gummi-, Gummiartigen Werkstoffen, Kunststoffen oder anderen Materialien bestehen. Eine Materialkombinationen kann ebenfalls vorteilhaft sein. Um Luftdruckunterschiede auszugleichen kann die Seitenwand luftdurchlässig sein.

Da die Seitenwände 5 elastisch sein sollten, können sie vorzugsweise in einem Spritzgußverfahren produziert werden. Alternative Möglichkeiten zur Herstellung sind ein Transfermolding Verfahren oder ein 3D-Druckverfahren.

Die Seitenwände 5 verfügen an dem inneren und äußeren Durchmesser über konturierte Kontaktflächen, die je nach Material als Verklebungsstelle oder auch Vulkanisationsstelle mit den bereits gefügten Reifenbaugruppen dienen. Es sind ebenfalls mechanische formschlüssige Verbindungsarten für die Seitenwände möglich.

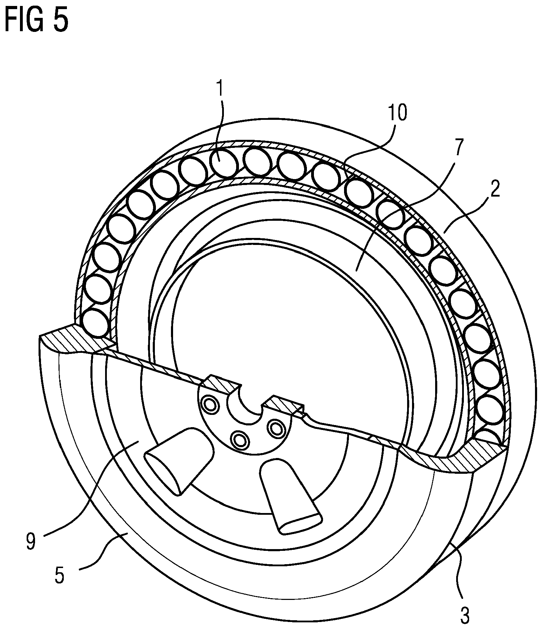

Die Figur 5 zeigt eine weitere Schnittansicht des erfindungsgemäßen Fahrzeugrades. Der Fahrzeugreifen ist auf einer konventionellen Fahrzeugfelge 9 angeordnet. Im mittleren Bereich 10 befinden sich eine Vielzahl von Füllkörpern 1. Der äußere Bereich 2 des Fahrzeugrades weist an seiner Außenseite einen Laufstreifen 3 auf.

Der innere Bereich 7 des Fahrzeugrades ist mit einer Druckluftkammer versehen.

### Bezugszeichenliste (Teil der Beschreibung)

- 1: Füllkörper
- 2: Äußerer Bereich des Fahrzeugrades
- 3: Laufstreifen
- 4: Hohlraum in den Füllkörpern
- 5: Seitenwand
- 6: Mittelachse des Füllkörpers
- 7: Innerer Bereich des Fahrzeugrades mit Druckluftkammer
- 8: Mittelachse des Fahrzeugrades
- 9: Konventionelle Fahrzeugfelge
- 10: Mittlerer Bereich

## Patentansprüche

1. Fahrzeugrad mit einem druckluftgefüllten inneren Bereich (7) und einem äußeren Bereich (2),
wobei der äußere Bereich (2) eine Vielzahl von Reifenbauteilen und zumindestens einen Laufstreifen (3) umfasst und
wobei der innere Bereich (7) eine Druckluftkammer mit einem Reifenwulst aufweist,
**dadurch gekennzeichnet, dass**
im mittleren Bereich (10) zwischen dem druckluftgefüllten inneren Bereich (7) und dem äußeren Bereich (2) eine Vielzahl von Federungselementen in Form von Füllkörpern (1) angeordnet sind.

2. Fahrzeugrad nach Anspruch 1,
**dadurch gekennzeichnet, dass**
die Füllkörper (1) in Form von zylindrisch geformten Rollen ausgebildet sind.

3. Fahrzeugrad nach einem der vorhergehenden Ansprüche,
**dadurch gekennzeichnet, dass**
die zylindrisch geformten Rollen in Bezug zur Mittelachse (8) des Fahrzeugrades eine Schrägstellung aufweisen.

4. Fahrzeugrad nach einem der vorhergehenden Ansprüche,
**dadurch gekennzeichnet, dass**
die Füllkörper (1) aus einem Kunststoff, Elastomer oder einem Verbundmaterial bestehen.

5. Fahrzeugrad nach einem der vorhergehenden Ansprüche,
**dadurch gekennzeichnet, dass**
die Füllkörper (1) einen Hohlraum (4) aufweisen.

6. Fahrzeugrad nach einem der vorhergehenden Ansprüche,
**dadurch gekennzeichnet, dass**
die Füllkörper (1) mit dem Hohlraum luftdicht verschlossen sind.

7. Fahrzeugrad nach einem der vorhergehenden Ansprüche,
**dadurch gekennzeichnet, dass**
die Füllkörper (1) einen Durchmesser zwischen 40 und 60 mm aufweisen.

8. Fahrzeugrad nach einem der vorhergehenden Ansprüche,
**dadurch gekennzeichnet, dass**
in den Zwischenräumen zwischen den Füllkörpern (1) mindestens ein Sensor, stromführende und datenführende Leitungen, mindestens eine Batterie und/oder ein Sender angeordnet sind.

9. Fahrzeugrad nach einem der vorhergehenden Ansprüche,
**dadurch gekennzeichnet, dass**
die Füllkörper (1) mit weiteren Materialen in Form von Kunststoff, Flüssiggummi und/ oder Verstärkungskomponenten umgeben ist.

10. Fahrzeugrad nach einem der vorhergehenden Ansprüche,
**dadurch gekennzeichnet, dass**
der innere Bereich (7), der mittlere Bereich (10) mit den Füllkörpern (1) und der äußere Bereich (2) des Fahrzeugrades mit einer Verklebung, einer Vulkanisationsverbindung, und/oder mit einer mechanischen Verbindung miteinander verbunden sind.
